# EUROPEAN PATENT APPLICATION

(11) **EP 1 600 955 A1**
(43) Date of publication of application: **30.11.2005**
(21) Application number: 05011644.1
(22) Date of filing: 30.05.2005
(51) Int. Cl.: G11B 5/78, G11B 5/73, G11B 5/74

(54) **Information recording tape**

(30) Priority: 28.05.2004 JP 2004158858
(71) Applicant: FUJI PHOTO FILM CO., LTD., Kanagawa (JP)
(72) Inventor: Sueki, Minoru, Odawara-shi Kanagawa (JP); Ejiri, Kiyomi, Odawara-shi Kanagawa (JP)
(74) Representative: HOFFMANN EITLE

(57) **Abstract**

An information recording tape including a data-recording area and a non-data-recording area, with the data-recording area having a center-line average surface roughness Ra smaller than 3 nm and at most 100/mm² of protuberances standing at least 20 nm high, and with the non-data-recording area having a center-line average surface roughness Ra greater than 2 nm and more than 100/mm² of protuberances standing at least 20 nm high.

## Description

### BACKGROUND OF THE INVENTION

### TECHNICAL FIELD OF THE INVENTION

The present invention relates to an information recording tape and, more particularly, to an information recording tape suitable for high-density recording, which has both high durability and excellent electromagnetic conversion characteristics.

### DESCRIPTION OF THE RELATED ART

At the occasion of recording and reproducing information on an information recording material designed for high-density recording use, it is required in some cases to locate an information recording/reproducing system at a position very close to the recording material surface. In the case of magnetic tape, for example, it is required to bring a magnetic recording/reproducing head into the close proximity of 100 nm or less above the magnetic tape surface. In addition, some optical recording materials require that an optical recording/reproducing head be situated in the proximity of the recording material surface.

On the other hand, such an information recording material is required to travel in the system. In the case of magnetic tape, for example, the tape housed in a cartridge is pulled out of the cartridge, passed through a recording/reproducing system, and then wound on another reel. Therein, the tape is brought into contact with a transport system including the recording/reproducing system.

In order to achieve higher-density recording, it is preferable that the data-recorded surface is very smooth and the distance between the recording/reproducing system and the surface of a recording material is short and constant. In order to perform transportation, on the other hand, it is required that better lubrication be accomplished between the data-recorded surface and the transport system, especially the recording/reproducing system surface. However, there are cases wherein very smooth planes cannot achieve sufficient lubrication.

Hitherto, the information recording surface has been provided with appropriate protuberances to reduce a touch area brought into contact with the sliding surface, and thereby reduction in friction has been accomplished. Therein, however, the protuberances have been designed so as not to degrade data recording/reproducing properties by adjusting their height and quantity. For instance, JP-A-9-320045 discloses the formation of fine grooves (or texture) on a nonmagnetic support constituting magnetic recording tape of metallic thin magnetic film type at a specified angle to the scanning direction of a head, and JP-A-2000-348398 discloses the magneto-optic recording medium having protuberances between every adjacent tracks on its surface, wherein all the protuberances have been partially ablated by one operation. In addition, JP-A-10-320761 discloses the magnetic recording medium having a plurality of protuberances on the substrate surface and including areas in which protuberances are formed more densely than other areas.

In achieving higher-density recording, however, there is a problem that it is undesirable to record data at positions those protuberances are present.

### SUMMARY OF THE INVENTION

The invention aims to provide an information recording tape that has satisfactory slide characteristics while keeping a smooth surface property and, what is more, has excellent electromagnetic conversion characteristics and high running durability.

The aforesaid aim of the invention is achieved by the following:
(1) An information recording tape including a data-recording area and a non-data-recording area, with the data-recording area having a center-line average surface roughness Ra smaller than 3 nm and at most 100/mm² of protuberances standing at least 20 nm high, and with the non-data-recording area having a center-line average surface roughness Ra greater than 2 nm and more than 100/mm² of protuberances standing at least 20 nm high.

By specifying surface characteristics of data-recording area as well as those of non-data-recording area, the invention can provide an information recording tape that keeps surface smoothness in the data-recording area and, at the same time, has not only a low friction coefficient and satisfactory slide characteristics, but also reduced dropout, a low error rate and a high SN ratio, and besides, high running durability.

### DETAILED DESCRIPTION OF THE INVENTION

The present information recording tape features its surface characteristics specified in the data-recording area and the non-data-recording area, respectively.

The term "data-recording area" used as herein refers to the area in which the data desired by a user is to be recorded, and the term "non-data-recording area" as used herein refers to the area other than the area in which the data desired by a user is to be recorded, so it also includes servo track bands previously recorded in information recording tape.

The feature of the invention is to have in the data-recording area a center-line average surface roughness Ra smaller than 3 nm (preferably from 1 to 2.5 nm, far preferably from 1 to 2 nm) and at most 100/mm² (preferably 1 to 50, far preferably 1 to 20 per square millimeter) of protuberances standing at least 20 nm high (preferably 20 to 60 nm high, far preferably 20 to 40 nm high), and in the non-data-recording area a center-line average surface roughness Ra greater than 2 nm (preferably from 3 to 10 nm, far preferably from 3 to 7 nm) and more than 100/mm² (preferably 200 to 500, far preferably 200 to 300 per square millimeter) of protuberances standing at least 20 nm high (preferably 20 to 60 nm high, far preferably 20 to 40 nm high).

In the invention, the non-data-recording area is required to have the surface characteristics specified above. However, the foregoing restrictions on the surface characteristics should not be construed as being imposed on all over the non-data-recording area, but the non-data-recording area is regarded as passing the surface characteristic requirements as far as at least 10% thereof meets those restrictions.

In accordance with the invention, both high-density recording and high running durability can be accomplished by designing, as mentioned above, the date-recording area to be smooth and have a small number of protuberances, while designing the non-data-recording area on the same surface to have a greater number of protuberances.

The center-line average surface roughness Ra of the present data-recording and non-data-recording areas each is a value determined by using a laser-beam interference surface roughness tester in accordance with JIS-B0601-1994.

The protuberances on the present data-recording and non-data-recording areas refer to the places extending upward by a certain height (specifically at least 20 nm) beyond the center line defined similarly in JIS-B0601-1994.

The term "information recording tape" as used in the invention refers to the tape on one side or both sides of which information is recorded, and includes magnetic tape, optical recording tape and magneto-optic tape.

In the following paragraphs, magnetic tape as an example of information recording tape will be described in detail. And the technical items described for the magnetic tape are also applicable to other information recording tapes.

Not only the data-recording area but also the non-data-recording area is a magnetic layer containing a magnetic substance. The magnetic layer may be a coating containing a ferromagnetic powder or a thin film of ferromagnetic metal.

The region in which the non-data-recording area is provided receives no particular restriction, but it is preferable that the non-data-recording area is provided in at least the vicinity of tape edges. Specifically, the suitable region includes guard bands and servo track bands. The guard bands participate in neither recording nor reproduction of signals in contrast to servo track bands. Incidentally, the non-data-recording area can be provided between every adjacent recording tracks in the data-recording area.

No particular restrictions are imposed on techniques for control of the surface characteristics of both the data-recording area and the non-data-recording area, but the following techniques are preferable:
1) Mechanical abrasion with whetting grains or whetstone.
2) Laser ablation.
3) Imprinting with a template having protuberances.
4) Use of supports differing in surface characteristics for the data-recording area and the non-data-recording area, respectively.
5) Method of coating the data-recording area and the non-data-recording area with different solutions, respectively,
   in which binder-powder combinations prepared so that those areas differ in surface characteristics are contained individually.
6) Photo-etching.

These techniques may be used independently or in combination.

The techniques 1) to 3) in particular are favorably applied to a magnetic layer, which is formed on a support so as to have the data-recording-area-specific surface characteristics and then slit, in making adjustments to the magnetic layer so that its non-data-recording area has the required surface characteristics.

Magnetic tape of magnetic-layer-coated type is described below in detail.

### «Magnetic Layer»

The magnetic layer of magnetic tape is illustrated by taking as one example a case where the binder used in the magnetic layer is polyurethane resin having Tg in the range of 100°C to 200°C. Incidentally, the polyurethane resin having Tg in the range of 100°C to 200°C is a binder usable in the invention, but the binder used in the invention should not be construed as being limited to this resin.

When a binder containing polyurethane resin having high Tg is used in the magnetic layer, a plastic flow of the magnetic layer by frictional heat produced as a result of sliding of a recording/reproducing head over the magnetic layer surface can be controlled, and thereby satisfactory coat strength can be ensured and excellent running durability can be achieved. This effect is especially remarkable when the magnetic layer is a thin layer.

The Tg of polyurethane resin used in the binder is from 100°C to 200°C, preferably from 120°C to 170°C. By adjusting the Tg to such a range, the coat strength can be ensured and, what is more, smoothing effect can be produced at the time of calender treatment, so satisfactory electromagnetic conversion characteristics and running durability can be obtained.

The suitable concentration of urethane groups in the polyurethane resin is in the range of 2.5 to 6. Ommol/g, preferably 3.0 to 4.5 mmol/g. When the urethane group concentration is 2.5 mmol/g or above, the Tg of the coat formed is high, and satisfactory durability can be attained. When the urethane group concentration is 6.0 mmol/g or below, on the other hand, the polyurethane resin can have high solvent solubility, so its dispersiveness becomes satisfactory. Further, an unduly high urethane group concentration in polyurethane resin results inevitably in no incorporation of polyol and a difficulty in molecular weight control, so it is undesirable from the synthetic point of view.

The suitable weight average molecular weight (Mw) of the polyurethane resin is from 30,000 to 200,000, preferably from 50,000 to 100,000. Molecular weight of 30,000 or higher can ensure high coat strength and satisfactory durability, and the molecular weight of 200,000 or below enables the polyurethane resin to have high solvent solubility and satisfactory dispersiveness.

Examples of a polar group suitable for the polyurethane resin include -SO₃M, -OSO₃M, -PO₃M₂ and -COOM, especially -SO₃M and -OSO₃M (wherein M is selected from a hydrogen atom, an alkali metal or ammonium). It is preferable that the polar group content is from 1×10⁻⁵ to 2×10⁻⁴ eq/g. When the polar group content is 1×10⁻⁵ eq/g or above, the polyurethane resin can adsorb firmly to a ferromagnetic powder and a non-magnetic powder and can have satisfactory dispersiveness. On the other hand, the polyurethane resin having a polar group content of 2×10⁻⁴ eq/g or below can have high solvent solubility and satisfactory dispersiveness.

Further, the polyurethane resin contains 2 to 20 OH groups, preferably 3 to 15 OH groups, per molecule. By containing 2 or more OH groups per molecule, the polyurethane resin can react favorably with an isocyanate-type curing agent, so it can obtain high coat strength and satisfactory durability. When the polyurethane resin contains 15 or less OH groups per molecule, on the other hand, high solvent solubility and satisfactory dispersiveness can be attained. Examples of a compound usable for introduction of OH groups into polyurethane resin include compounds having at least trifunctionality of OH origin, such as trimethylolethane, trimethylolpropane, trimeritic acid anhydride, glycerin, pentaerythritol, hexanetriol, and branched polyester or polyether ester having tri- or higher functionality of OH origin. Of these compounds, the trifunctional compounds are preferred over the others. The compound having at least tetrafunctionality of OH origin can react with a curing agent too quickly, so the pot life becomes short.

As a polyol constituent of the polyurethane resin contained in a binder, known polyol compounds including polyester polyol, polyether polyol, polycarbonate polyol, polyether ester polyol, polyolefin polyol and diol compounds having cyclic structures or long alkyl chains, such as dimer diol, can be used.

The suitable molecular weight of such polyol is of the order of 500 to 2, 000. When the molecular weight is within such a range, the weight percentage of the diisocyanate can be significantly raised, and thereby the urethane linkage content can be increased significantly to result in reinforcement of intermolecular interaction. Thus, a coat having a high glass transition temperature and high mechanical strength can be obtained.

The diol constituent is preferably a diol compound having a ring structure or a long alkyl chain. Herein, the long alkyl chain refers to the alkyl group containing 2 to 18 carbon atoms. When the diol constituent has a ring structure or a long alkyl chain, a bending structure is formed therein to contribute to excellent solubility in solvents. By such a diol constituent, the urethane molecular chain adsorbed to a magnetic or non-magnetic substance in a coating solution can be expanded to a great extent; as a result, the diol constituent has a function of enhancing the dispersion stability and can contribute to excellent electromagnetic conversion characteristics. On the other hand, when the polyol constituent has a ring structure, polyurethane having high glass transition temperature can be obtained.

The diol compounds represented by the following formulae are especially preferred as diol compounds having a ring structure and a long alkyl chain, respectively: 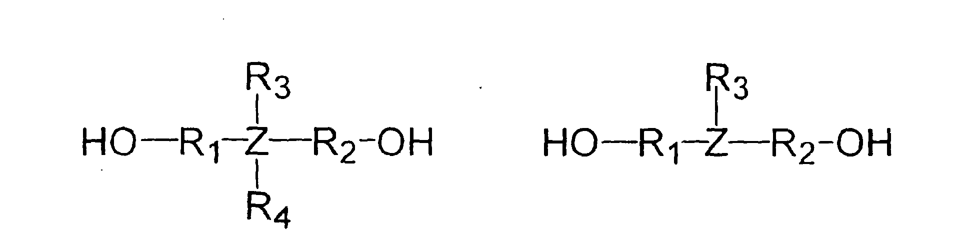 wherein Z is a ring structure selected from a cyclohexane ring, a benzene ring or a naphthalene ring, R₁ and R₂ are each a 1-18C alkylene group, and R₃ and R₄ are each a 2-18C alkyl group.

The suitable proportion of the foregoing diol constituent in the polyurethane resin is from 10 to 50 % by weight, preferably from 14 to 40 % by weight. When the proportion is 10 % by weight or above, high solvent solubility and satisfactory dispersiveness can be obtained; while, when the proportion is 50 % by weight or below, a coat having high Tg and excellent durability can be formed.

In the polyurethane resin, diol constituents other than the foregoing diol constituents can further be used as chain extender. When the molecular weight of diol constituents becomes great, the diisocyanate content is inevitably reduced and thereby the urethane linkage content in the polyurethane is lowered and the coat strength becomes poor. Accordingly, it is favorable for sufficient coat strength that the chain extender used in combination is a low-molecular-weight diol whose molecular weight is lower than 500, preferably lower than 300.

Examples of such a low-molecular-weight diol include aliphatic glycols, such as ethylene glycol, 1,3-propanediol, propylene glycol, neopentyl glycol (NPG), 1,4-butanediol, 1,5-pentanediol, 1,6-hexanediol, 1,8-octanediol, 1,9-nonanediol, 2,2-dimethyl-1,3-propanediol, 2-ethyl-2-butyl-1,3-propanediol and 2,2-diethyl-1,3-propanediol; alicyclic glycols, such as cyclohexanedimethanol (CHDM), cyclohexanediol (CHD) and hydrogenated bisphenol A (H-BPA); ethylene oxide or propylene oxide adducts of the glycols as recited above; aromatic glycols, such as bisphenol A (BPA), bisphenol S, bisphenol P and bisphenol F; and ethylene oxide or propylene oxide adducts of the aromatic glycols as recited above. Of these diol compounds, hydrogenated bisphenol A is preferred over the others.

As to the diisocyanate, known ones can be used in the polyurethane resin. Examples of a diisocyanate suitable for the polyurethane resin include TDI (tolylene diisocyanate), MDI (diphenylmethane diisocyanate), p-phenylene diisocyanate, o-phenylene diisocyanate, m-phenylene diisocyanate, xylylene diisocyanate, hydrogenated xylylene diisocyanate and isohorone diisocyanate.

In the invention, the polyurethane resin may be used in combination with a synthetic resin of vinyl chloride type. The polymerization degree of a vinyl chloride resin usable in combination is preferably from 200 to 600, particularly preferably from 250 to 450. The vinyl chloride resin may be a copolymer of vinyl chloride and another vinyl monomer, such as vinyl acetate, vinyl alcohol, vinylidene chloride or acrylonitrile.

In addition to those vinyl chloride resins, the polyurethane resin can be used in combination with various other synthetic resins. Examples of such synthetic resins include ethylene-vinyl acetate copolymer, cellulose derivatives such asnitrocelluloseresin,acrylic resins,polyvinylacetalresins, polyvinyl butyral resins, epoxy resins and phenoxy resins. These resins can be used alone or as mixtures.

When the polyurethane resin is used in combination with other synthetic resins, it is appropriate that the proportion of the polyurethane resin to the total binders contained in the magnetic layer be from 10 to 90 % by weight, preferably from 20 to 80 % by weight, particularly preferably from 25 to 60 % by weight. And it is appropriate that the proportion of vinyl chloride resins to the total binders in the magnetic layer be from 10 to 80 % by weight, preferably from 20 to 70 % by weight, particularly preferably from 30 to 60 % by weight.

In addition, a curing agent such as a polyisocyanate compound can be used together with the binders as cited above. Examples of such a polyisocyanate compound include the products of reaction between 3 moles of tolylene diisocyanate and 1 mole of trimethylolpropane (e.g., Desmodule L-75, manufactured by Bayer), the product of reaction between 3 moles of another diisocyanate (such as xylylene diisocyanate or hexamethylene diisocyanate) and 1 mole of trimethylolpropane, the adduct formed by treating 3 moles of hexamethylene diisocyanate with biuret, an isocyanurate compound of 5 moles of tolylene diisocyanate, an isocyanurate adduct formed from 3 moles of tolylene diisocyanate and 2 moles of hexamethylene diisocyanate, polymer of isophorone diisocyanate and polymer of diphenylmethanen diisocyanate.

The suitable content of such a polyisocyanate compound in binders of the magnetic layer is from 10 to 50 % by weight, preferably from 20 to 40 % by weight. When the curing treatment is performed by electron-beam irradiation, on the other hand, a compound having a reactive double bond, such as urethane acrylate, can be used. It is appropriate that the proportion of the total amount of the resin component and the curing agent (namely the binder) to the amount of ferromagnetic powder be usually from 15:100 to 40: 100 by weight, preferably from 20: 100 to 30:100 by weight.

### <Ferromagnetic Powder>

In the invention, it is preferable that the ferromagnetic powder used in the magnetic layer has an averagemajor-axis length or an average tablet diameter of 60 nm or below. The average major-axis length or tablet diameter within such a range can deliver a higher S/N ratio, so the adjustment to such a range is favorable for attainment of a consistent error rate in the invention.

It is preferable by far that the average major-axis length of the ferromagnetic power is from 30 to 50 nm.

And it is preferable by far that the average tablet size of the ferromagnetic powder is from 10 to 35 nm, especially from 10 to 25 nm.

In the invention, the ferromagnetic powder used in the magnetic layer is preferably a ferromagnetic powder having the coersivityspecified below. Examples of a ferromagnetic powder usable in the invention include ferromagnetic metal powders and hexagonal ferrite powders.

### (Ferromagnetic Metal Powder)

In the invention, it is appropriate that the ferromagnetic metal powder used in the magnetic layer be a ferromagnetic alloy powder having its specific surface area determined by BET method (S_{BET}) in the range of 40 to 80 m²/g, preferably from 50 to 70 m²/g. The crystallite size of such a ferromagnetic alloy powder is preferably from 12 to 25 nm, far preferably from 12 to 22 nm, particularly preferably from 14 to 20 nm.

Examples of such a ferromagnetic metal powder include yttrium-containing Fe, Fe-Co, Fe-Ni and Co-Ni-Fe alloys. As to the yttrium contents in these ferromagnetic metal powders, it is appropriate that the proportion of yttrium atoms based on iron atoms, Y/Fe, be from 0.5 to 20 atomic %, preferably from 5 to 10 atomic %. When the proportion of yttrium is 0.5 atomic % or above, the ferromagnetic metal powder can attain high saturation magnetization (σs) to result in enhancement of magnetic characteristics, thereby ensuring satisfactory electromagnetic conversion characteristics. When the proportion of yttrium is 20 atomic % or below, on the other hand, the iron content is within an appropriate range, so the magnetic characteristics canbe kept satisfactory and the electromagnetic conversion characteristics are enhanced. Further, those ferromagnetic alloy powders may further contain other elements in a proportion of 20 atomic % or below based on 100 atomic % iron. Examples of such elements include aluminum, silicon, sulfur, scandium, titanium, vanadium, chromium, manganese, copper, zinc, molybdenum, rhodium, palladium, tin, antimony, boron, barium, tantalum, tungsten, rhenium, gold, lead, phosphorus, lanthanum, cerium, praseodymium, neodymium, tellurium and bismuth. In addition, the ferromagnetic metal powder may contain a small amount of water, hydroxide or oxide.

One example of a method of preparing a ferromagnetic metal powder usable in the invention, into which cobalt and yttrium are introduced, is described below. Specifically, the method of using as a starting material ferric oxyhydroxide prepared by blowing an oxidizing gas into an aqueous suspension in which a ferrous salt and an alkali are mixed can be cited. As to the species of such ferric oxyhydroxide, α-FeOOH is preferred. There are two methods for preparation of α-FeOOH. In one method, a ferrous salt is neutralized with an alkali hydroxide to prepare an aqueous suspension of Fe(OH)₂, and then an oxidizing gas is blown into the suspension to produce acicular α-FeOOH. In the other method, a ferrous salt is neutralized with an alkali carbonate to prepare an aqueous suspension of FeCO₃, and then an oxidizing gas is blown into the suspension to produce fusiform α-FeOOH. However, it is preferable that such ferric oxyhydroxide is a product obtained by reacting an aqueous solution of ferrous salt with an aqueous solution of alkali to prepare an aqueous solution containing ferrous hydroxide and then oxidizing the ferrous hydroxide by air oxidation. In carrying out the reaction, a Ni salt, an alkaline earth metal salt such as a Ca salt, a Ba salt or a Sr salt, a Cr salt or/and a Zn salt may be present in the aqueous solution of ferrous salt, and the addition of salts selected appropriately from those salts makes it possible to control the grain shape (including an axial ratio).

The ferrous salt used therein is preferably ferrous chloride or ferrous sulfate. And the alkali used therein is preferably sodium hydroxide, aqueous ammonia, ammonium carbonate or sodium carbonate. The salts suitable for presence in the aqueous solution ferrous salt are chlorides, with examples including nickel chloride, calcium chloride, barium chloride, strontium chloride, chromium chloride and zinc chloride. In the next step, cobalt is incorporated into iron prior to incorporation of yttrium by mixing an aqueous solution of cobalt compound, such as cobalt sulfate or cobalt chloride, into the foregoing slurry of ferric oxyhydroxide with stirring. After preparation of cobalt-containing slurry of ferrous oxyhydroxide, yttrium can be introduced by adding an aqueous solution of yttrium compound to the slurry, followed by mixing and stirring them.

In addition to yttrium, lanthanide elements such as neodymium, samarium, praseodymium and lanthanum may be introduced into a ferromagnetic metal powder used in the invention. These elements can be introduced by using chlorides, such as yttrium chloride, neodymium chloride, samarium chloride, praseodymium chloride and lanthanum chloride, or nitrates such as neodymium nitrate and gadolinium nitrate. Therein, these salts may be used in combination of two or more species. The ferromagnetic metal powder used in the invention has no particular restriction on its shape, but the powder of an acicular, granular, dicelike, rice-grain or tabular shape is generally used. And the ferromagnetic metal powder of an acicular shape can be used to particular advantage.

### (Hexagonal Ferrite Powder)

Examples of hexagonal ferrite containable in the magnetic layer according to the invention include barium ferrite, strontium ferrite, lead ferrite, calcium ferrite and substitution products of these ferrites, such as products obtained by Cobalt substitution of ferrites. More specifically, magnetoplumbite-type barium or strontium ferrite, magnetoplumbite-type ferrite whose particle surface is covered with spinel, and magnetoplumbite-type barium or strontium ferrite containing in part a spinel phase are usable in the magnetic layer. These hexagonal ferrites may be doped with various atoms other than the atoms as specified above, such as Al, Si, S, Sc, Ti, V, Cr, Cu, Y, Mo, Rh, Pd, Ag, Sn, Sb, Te, Ba, Ta, W, Re, Au, Hg, Pb, Bi, La, Ce, Pr, Nd, P, Co, Mn, Zn, Ni, Sr, B, Ge and Nb. In general, combinations of two or more of those elements, such as Co-Ti, Co-Ti-Zr, Co-Ti-Zn, Ni-Ti-Zn, Nb-Zn-Co, Sb-Zn-Co and Nb-Zn combinations, can be used as dopants. Depending on starting materials and the production method used, there are cases where specific impurities are contained in ferrites.

The tablet diameters of hexagonal ferrite powder usable in the invention mean the maximum diameters of hexagons as the underside shape of hexagonal columns constituting hexagonal ferrite magnetic powder, and the average tablet diameter is arithmetic mean of such diameters. When reproduction is carried out with a magnetoresistive head with the intention of heightening track density in particular, low noise is required. Therefore, it is preferable that the average tablet diameter is adjusted to 35 nm or below. However, as far as the average tablet diameter is in the range of 10 to 60 nm, stable magnetization unaffected by thermal fluctuations can be expected, and noise can be controlled. So such a range is suitable for high-density magnetic recording. The suitable tabular ratio (tablet diameter/tablet thickness ratio) is from 1 to 15, preferably from 1 to 7. The tabular ratios of 1 or above can offer satisfactory orientational ordering while keeping high filling capacity in the magnetic layer. And the tabular ratios of 15 or below can avoid the influences of inter-grain stacking, so increase in noises can be prevented.

It is appropriate that the S_{BET} of the powder having grain sizes in the foregoing range be in the range of 30 to 200 m²/g. The specific surface area agrees in the main with the value arithmetically calculated from tablet diameters and tablet thicknesses of grains. The narrower the distribution of tablet diameters of grains and that of tablet thickness of grains, the better results can be obtained. Although it is difficult to convert such distributions into a numerical value, comparisons can be made by measurements of 500 grains randomly selected from a TEM grains photograph. The measured values don't have a Gaussian distribution in many cases, but the ratio of a standard deviation σ to an average size can be calculated and found to be from 0.1 to 2.0. In order to make grains have a narrow size distribution, it is carried out not only to render a reaction system for forming grains as homogeneous as possible but also to subject the formed grains to distribution-improving treatment. For instance, amethodof selectivelydissolving superfine grains in an acid solution is known to be applicable.

The coercivity Hc measured in the form of hexagonal ferrite powder is of the order of 160-320 kA/m (2,000 Oe to 4,000 Oe). The higher coercivity Hc a magnetic substance has, the more advantageous the magnetic substance to achieve high-density recording. However, limits are imposed on the coercivity Hc by the performance of a recording head used. The coercivity Hc can be controlled by properly choosing grain dimensions (tablet diameter, tablet thickness), species and quantities of constituent elements, substitution sites of elements, and reaction conditions for forming grains.

The appropriate saturation magnetization σs of hexagonal ferrite powder is from 30 to 80 A·m²/kg, preferably from 40 to 60 A·m²/kg. There is a tendency of σs to become smaller with decrease in grain size. To preparation of such a ferrite powder, the method of shortening a treatment time at the crystallization temperature or thermal treatment temperature, method of increasing the amounts of compounds added, or the method of increasing the amount of surface treatment can be applicable. Alternatively, it is possible to use W-type hexagonal ferrite. In dispersing the magnetic substance, it is also carried out to treat the surfaces of magnetic grains with a dispersion medium and a material compatible with polymers.

The agent used for surface treatment may be an inorganic compound, or may be an organic compound. Typical examples of such compounds include oxides and hydroxides of Si, Al and P, various kinds of silane coupling agents and various kinds of titanium coupling agents. The proportion of a surface treatment agent to the magnetic substance to be treated therewith is 0.1 to 10 % by weight. The pH of a magnetic substance is important for dispersion. In general, the pH ranges from about 4 to about 12, and there is an optimum value for the pH depending on what kinds of a dispersing medium and a polymer are used. However, the pH is chosen from a range of about 6 to about 11 from the viewpoints of chemical stability and keeping quality of the medium. The moisture contained in a magnetic substance has also an effect on dispersion. Although there is an optimum value depending on the dispersing medium and the polymer used, the moisture content is generally chosen from the range of 0.01 to 2.0 % by weight.

Examples of a method for producing hexagonal ferrite include (1) aglasscrystallizationmethod,whereinbariumoxide, iron oxide, metal oxides for replacing iron and boron oxide as a glass forming material are mixed together in their respective amounts enabling the desired composition, fused and then quenched to yield an amorphous matter, and the amorphous matter is subjected to heating treatment again, and then to washing and grinding to produce a barium ferrite crystalline powder; (2) a hydrothermal reaction method, wherein a metal salt solution having a barium ferrite composition is neutralized with an alkali, by-products is removed, and the liquid phase thus obtained is heated at a temperature of at least 100°C, washed, dried, and then ground to prepare a barium ferrite crystalline powder; and (3) a coprecipitation method, wherein a metal salt solution having a barium ferrite composition is neutralized with an alkali, and subjected successively to removal of by-products, drying, treatment at a temperature of 1,100 °C or below and grinding, thereby preparing a barium ferrite crystalline powder. And any of these methods may be used in the invention.

### <Thickness and Coercivity Hc of Magnetic Layer>

The magnetic layer is formed by coating on a support a magnetic coating material which is prepared by kneading and dispersing the resin component, the curing agent and the ferromagnetic powder as mentioned above together with a solvent usually used in preparing a magnetic coating material, such as methyl ethyl ketone, dioxane, cyclohexanone or ethyl acetate. The kneading and dispersing operation can be performed in the usual way. In addition to the ingredients recited above, the magnetic coating material may contain usually used additives including an abrasive such as α-Al₂O₃ or Cr₂O₃, an antistatic agent such as carbon black, a lubricant such as a fatty acid, a fatty acid ester or silicone oil and a dispersant, or usually used fillers.

In the invention, it is appropriate that the thickness of the magnetic layer be from 0.01 to 0.15 µm, preferably from 0.05 to 0.13 µm.

The thickness of 0. 15 µm or below is advantageous, because the value of PW50 (half-pulse width) can be optimized and the consistent error rate can be obtained during the high-density recording.

For reducing self-demagnetization loss and achieving high-density recording, it is appropriate in the invention that the coercivity value Hc of the magnetic layer in the length direction or in in-plane directions be in a range of 159 to 318 kA/m (2,000 to 4,000 Oe). As far as the value of coercivity Hc is 159 kA/m or above, satisfactory high-density recording can be achieved. The higher value of coercivity Hc is the more favorable, because the higher S/N ratio can be attained in the case of high-density recording. However, too high values of Hc bring about reduction in erase rate. Therefore, it is appropriate in the invention that the upper limit of Hc of the magnetic layer in the length direction or in-plane directions be set at 318 kA/m. However, the upper limit is on an upward trend since the recent improvements inmagnetic headperformances have brought about enhanced erase capability. Under the present circumstances, the value of the coercivity Hc is preferably in the range of 159 to 279 kA/m (2,000 to 3,500 Oe), particularly preferably in the range of 159 to 200 kA/m (2, 000 to 2, 500 Oe).

Incidentally, the wording "length direction of the magnetic layer" as used herein refers to the direction coincident with the running direction of magnetic tape, and the direction perpendicular to the width direction. And the wording "in-plane directions of the magnetic layer" as used herein refers to the directions parallel to the magnetic layer.

For attaining the coercivity Hc as specified above in the length or in-plane directions of the magnetic layer, it is appropriate in the invention to use a ferromagnetic powder made up of fine grains having an average maj or-axis length or an average tablet diameter of 60 nm or below and having saturated magnetization (σs) ranging from 110 to 155Am²/kg and a coercivity Hc of at least 159 kA/m.

Next the additives mixable in the magnetic layer together with the aforementioned binder and ferromagnetic powder are described.

### <Carbon Black>

Examples of carbon black used in the magnetic layer according to the invention include furnace black for rubber use, thermal black for rubber use, carbon black for coloring and acetylene black. It is preferable that the carbon black used has its specific surface area in the range of 5 to 500 m²/g, its DBP (dibutyl phthalate) absorptive capacity in the range of 10 to 400 ml/100 g, its average grain size in the range of 5 to 300 nm, its pH in the range of 2 to 10, its water content in the range of 0.1 to 10 % and its tap density in the range of 0.1 to 1 g/ml. Examples of such carbon black include those disclosed in WO 98/35345.

The carbon black has functions of preventing electrification of the magnetic layer, reducing a friction coefficient of the magnetic layer, shielding the magnetic layer from light and heightening film strength of the magnetic layer. The function varies depending on the type of carbon black used. When a multilayer structure is adopted in the invention, therefore, it is possible as a matter of course to choose the types, the amounts and the combination of carbon black products used in each layer on the basis of various characteristics as mentioned above, including grain size, oil absorption, electric conductivity and pH, depending on the intended purposes, or it is rather required to optimize those factors for every layer.

### <Abrasive>

In the invention, an abrasive can be mixed in the magnetic layer. Specifically, the abrasive mainly used in the magnetic layer is made up of one or more of known materials having Mohs' hardness of at least 6, such as aluminum oxide having an α-alumina content of at least 90 %, β-alumina, silicon carbide, chromium oxide, cerium oxide, α-iron oxide, corundum, artificial diamond, silicon nitride, silicon carbide, titanium carbide, titanium dioxide, silicon dioxide and boron nitride. Further, these abrasives may be used in the form of complex (obtained by treating the surface of one abrasive with another abrasive).

Although compounds or elements other than the major components are sometimes contained in those abrasives, they have no effect on abrasive function as far as the proportion of major component in each abrasive is not lower than 90 %. The suitable average grain size of those abrasives each is from 0.01 to 2 µm. For enhancement of electromagnetic conversion characteristics (S/N) in particular, it is favorable that those abrasives have narrow grain size distributions. For elevation of durability, on the other hand, abrasives having different grain sizes are combined as required, or abrasives may be used individually as far as their particle size distributions are broad.

It is appropriate that the abrasives used have their tap density in the range of 0.3 to 2 g/cc, their water content in the range of 0.1 to 5 %, their pH in the range of 2 to 11 and their specific surface area in the range of 1 to 30 m²/g. The abrasives used in the invention may have any of acicular, spherical and dicelike shapes. However, shapes having edges in parts are advantageous from the viewpoint of abrasive capability. Examples of such abrasives include those disclosed in WO 98/35345. The use of diamond in the manner described in the document cited is especially effective in improving running durability and electromagnetic conversion characteristics. Needless to say, the grain size and amount optimizations of abrasives added to the magnetic layer and a nonmagnetic layer, respectively, are required to be performed.

### <Other Additives>

In addition to the abrasives, other additives having their respective effects of lubricating, preventing electrification, dispersing and plasticizing can also be added to the magnetic layer according to the invention. By combining those additives, comprehensive improvement in performance can be aimed at. As an additive producing the effect of lubricating, lubricants having a remarkable action on coagulation by friction between material surfaces canbe used. There are two types of lubricants. Although the lubricants used in magnetic tape cannot be determined strictly whether they are of the hydrodynamic lubrication type or of the boundary lubrication type, it is possible to classify in general conception higher fatty acid esters, liquid paraffin and silicone derivatives as the type of hydrodynamic lubrication, while long-chain fatty acids, fluorine-containing surfactants and fluoropolymers as the type of boundary lubrication. In a medium of coated type, a lubricant is present in a state of being dissolved in a binder and adsorbed in part to ferromagnetic power surface, and besides, it migrates toward the magnetic layer surface. The migration speed of the lubricant is determined by whether the compatibility with the binder is good or poor. High compatibility between the lubricant and the binder results in low-speed migration, while low compatibility results in high-speed migration. As a good/poor criterion of compatibility, solubility parameter comparison between the binder and the lubricant can be adopted. Nonpolar lubricants are effective for hydrodynamic lubrication, and polar lubricants are effective for boundary lubrication.

In the invention, it is appropriate to combine a higher fatty acid ester showing hydrodynamic lubrication and a long-chain fatty acid ester showing boundary lubrication, preferably at least three species of lubricants different in characteristic. Further, such a combination may be used in combination with a solid lubricant.

Examples of a solid lubricant usable therein include molybdenum disulfide, tungsten disulfide, graphite, boron nitride and graphite fluoride. Examples of a long-chain fatty acid showing boundary lubrication include 10-24Cmonobasic fatty acids (which may contain unsaturated bonds or be branched) and metal salts thereof (including Li, Na, K and Cu salts). Examples of a fluorine- containing surfactant and a fluoropolymer include fluorine-containing silicone, fluorine-containing alcohol, fluorine-containing ester, and fluorine-containing alkylsulfate and alkali metal salts thereof. Examples of a higher fatty acid ester showing hydrodynamic lubrication include mono-, di- or tri-fatty acid esters prepared from 10-24C monobasic fatty acids (which may contain unsaturated bonds or be branched) and any one of 2-12C mono-, di-, tri-, tetra-, penta-and hexa-hydric alcoholcompounds(which may contain unsaturated bonds or be branched), and fatty acid esters of alkylene oxide polymer monoalkyl ethers. Other lubricants showing hydrodynamic lubrication are liquid paraffin and silicone derivatives. Examples of such silicone derivatives include silicone oils, such as dialkylpolysiloxane (the alkyl moiety of which contains 1 to 5 carbon atoms), dialkoxypolysiloxane (the alkyl moiety of which contains 1 to 4 carbon atoms), monoalkylmonoalkoxypolysiloxane (the alkyl moiety of which contains 1 to 5 carbon atoms, and the alkoxy moiety of which contains 1 to 4 carbon atoms), phenylpolysiloxane and fluoroalkylpolysiloxane (the alkyl moiety of which contains 1 to 5 carbon atoms), polar group-containing silicone, fatty acid-modified silicone and fluorine-containing silicone.

Examples of other lubricants include alcohol compounds such as 12-22C mono-, di-, tri-, tetra-, penta- or hexa-hydric alcohol (which may contain an unsaturated bond or be branched), 12-22C alkoxyalcohol (which may contain an unsaturated bond or be branched) and fluorine-containing alcohol, polyolefin such as polyethylene wax or polypropylene, polyglycol such as ethylene glycol or polyethylene oxide wax, alkylphosphate and alkali metal salts thereof, alkylsulfate and alkali metal salts thereof, polyphenyl ether, 8-22C fatty acid amide, and 8-22C aliphatic amine.

Examples of compounds usable as additives producing antistatic, dispersion and plasticization effects include phenylphosphonic acid (e.g., PPA, produced by Nissan Chemical Industries, Ltd.), α-naphthyl phosphate, phenyl phosphate, diphenyl phosphate, p-ethylbenzenephosphonic acid, phenylphosphinic acid, aminoquinones, a wide variety of silane coupling agents, titanium coupling agents, and fluorine-containing alkylsulfate and alkali metal salts thereof.

As the lubricants used in the invention, fatty acids and fatty acid esters are especially suitable. Examples of these lubricants include those described in WO 98/35345. In addition, those lubricants may also be used in combination with other lubricants and additives.

Further, nonionic surfactants of alkylene oxide type, glycerin type, glycidol type and alkylphenol-ethylene oxide adduct type, cationic surfactants such as cyclic amines, ester amides, quaternary ammonium salts, hydantoin derivatives, heterocyclic compounds, phosphoniums and sulfoniums, anionic surfactants containing acid groups such as carboxyl, sulfo, phospho, sulfate and phosphate groups, and amphoteric surfactants such as amino acids, aminosulfonic acids, sulfuric or phosphoric acid esters of amino alcohols and alkyl betaine-type surfactants can be used, too.

Details of these surfactants are described in Kaimen Kasseizai Binran (which may be translated by an English title "Handbook of Surfactants"), published by Sangyo Tosho K.K. The lubricants and antistatic agents as recited above are not always required to be 100% pure, but may contain impurities, such as isomers, materials remaining unreacted, by-products, decomposed matter and oxides. The allowable level of contamination with such impurities is below 30 %, preferably below 10 %.

In the invention, the fatty acid esters may be combinations of monoesters with diesters as described in WO 98/35345.

In the invention, the suitable content of lubricants in the magnetic layer is from 5 to 30 parts by weight per 100 parts by weight of ferromagnetic powder.

Those lubricants and surfactants used in the invention have their own physical actions, and not only their types and amounts but also the ratio between lubricants producing synergistic effects by the combined use requires optimizing in accordance with the intended purpose. For instance, it is thought that oozing from the surface is controlled by using fatty acids having different melting points in the nonmagnetic layer and the magnetic layer, respectively, or by using esters differing in boiling point, melting point or polarity in the nonmagnetic layer and the magnetic layer, respectively, the coating stability is enhanced by controlling the amount of surfactants added, and the lubricating effect is elevated by adding a greater amount of lubricant to the nonmagnetic layer. Needless to say, the cases mentioned above should not be construed as limiting the scope of the invention. In general the total proportion of lubricants can be chosen from the range of 0.1 to 50 parts by weight, preferably 2 to 25 parts by weight, per 100 parts by weight of magnetic or nonmagnetic powder.

All or part of additives used in the invention may be added in any of processes for preparing a magnetic coating material and a nonmagnetic coating material. For instance, there are cases where the additives are mixed with a ferromagnetic substance prior to the kneading process, they are added during the process of kneading a ferromagnetic substance, a binder and a solvent, they are added in the process of dispersion, they are added after the dispersion process, and they are added just before coating. In some other cases, simultaneous or successive application of all or part of the additives to an already formed magnetic layer allows the desired purposes to be achieved. Depending on the purposes, on the other hand, the magnetic layer surface may be coated with a lubricant after a calendering or slitting operation is completed.

### «Nonmagnetic Layer»

The magnetic tape according to the invention can have a nonmagnetic layer as an underlayer of the magnetic layer as mentioned above. The nonmagnetic layer is described below in detail.

The nonmagnetic layer in the invention can achieve its effect as far as it is nonmagnetic in a substantial sense. It is needless to say that, even when a small amount of magnetic powder is present in a nonmagnetic layer as impurity or added thereto intentionally, the nonmagnetic layer is regarded as having substantially the same composition as specified in the invention, provided that it can produce effects of the invention.

The expression "nonmagnetic in a substantial sense" as used herein means that the nonmagnetic layer has residual flux density of at most 10 mT or coercivity Hc of at most 8 kA/m (100 Oe), preferably it has neither residual flux density nor coercivity. When the nonmagnetic layer contains a magnetic powder, it is preferable that the proportion of the magnetic powder to the total inorganic powders in the nonmagnetic layer is smaller than 1/2. In place of the nonmagnetic layer, a soft magnetic layer containing a soft magnetic powder and a binder may be formed as an underlayer. The thickness of the soft magnetic layer is same as that of the nonmagnetic layer.

The nonmagnetic layer suitable for the invention is a layer in which a nonmagnetic inorganic powder and a binder dominate. The nonmagnetic powder used in the nonmagnetic layer can be selected from inorganic compounds, such as metal oxides, metal carbonates, metal sulfates, metal nitrides, metal carbides or metal sulfides. Examples of an inorganic compound usable as the nonmagnetic powder include aluminum oxide having an α-alumina content of at least 90 %, β-alumina, γ-alumina, θ-alumina, silicon carbide, chromium oxide, cerium oxide, α-iron oxide, hematite, goethite, corundum, siliconnitride, titaniumcarbide, titanium dioxide, silicon dioxide, tin oxide, magnesium oxide, tungsten oxide, zirconium oxide, boron nitride, zinc oxide, calcium carbonate, calcium sulfate, barium sulfate, molybdenum disulfide and combinations of two or more thereof. Of these inorganic compounds, titanium dioxide, zinc oxide, α-iron oxide and barium sulfate are used to advantage over others because these compounds have narrow particle size distributions and many methods for getting functions. In particular, it is effective to use titanium oxide or α-iron oxide.

It is appropriate that the average grain size of those nonmagnetic powders each be in a range of 5 to 200 nm. And nonmagnetic powders having different average grain size can be used in combination, if needed. Alternatively, the same effect can be produced by independent use of a nonmagnetic powder having a board size distribution. The especially suitable average grain size of nonmagnetic powders each is in the range of 10 to 200 nm. When the nonmagnetic powder is a granular metal oxide in particular, it is preferable that the average grain size thereof is 80 nm or below; while, in the case of an acicular metal oxide, its average major-axis length is preferably 300 nm or below, far preferably 200 nm or below.

The tap density of nonmagnetic inorganic powders each is generally from 0.05 to 2 g/ml, preferably from 0.2 to 1.5 g/ml. The water content of the nonmagnetic powders each is generally from 0.1 to 5 % by weight, preferably from 0.2 to 3 % by weight, far preferably from 0.3 to 1.5 % by weight. The pH of the nonmagnetic powders each is generally from 2 to 11, but the pH range of 5.5 to 10 is preferred in particular. The specific surface area of the nonmagnetic powders each is generally from 1 to 100 m²/g, preferably from 5 to 80 m²/g, far preferably from 10 to 70 m²/g. The suitable crystallite size of nonmagnetic powders each is preferably from 0.004 to 1 µm, far preferably 0.04 to 0.1 µm. The DBP oil absorptive capacity is generally in a range of 5 to 100 ml/100 g, preferably in a range of 10 to 80 ml/100 g, far preferably in a range of 20 to 60 ml/100 g. The specific gravity is generally from 1 to 12, preferably from 3 to 6. The nonmagnetic powders each may have any of acicular, spherical, polyhedral and tabular shapes. The suitable Mohs' hardness of nonmagnetic powders each is from 4 to 10. The amount of stearic acid (SA) adsorbed to nonmagnetic powders each is from 1 to 20 µmol/m², preferably from 2 to 15 µmol/m², far preferably from 3 to 8 µmol/m².

It is appropriate to make Al₂O₃, SiO₂, TiO₂, ZrO₂, SnO₂, Sb₂O₃, ZnO or Y₂O₃ be present on the surface of those nonmagnetic inorganic powders each by surface treatment. Of these oxides, Al₂O₃, SiO₂, TiO₂ and ZrO₂, especially Al₂O₃, SiO₂ and ZrO₂, are preferred over the others from the viewpoint of dispersibility in particular. Those oxides may be used in combination or independently. Depending on the intended purposes, such a surface treatment layer can be formed by co-precipitation of oxides, or by providing an alumina layer first and then silica layer, or vise versa. In addition, the surface treatment layer formed may be porous depending on the intended purposes, but it is generally appropriate that the layer be uniform and dense.

Examples of nonmagnetic inorganic powders usable in the underlayer and preparation methods thereof can be found in descriptions in WO 98/35345.

To the nonmagnetic layer, an organic powder can further be added depending on the intended purpose. Examples of such an organic powder include acrylic-styrene resin powder, benzoguanamine resin powder, melamine resin powder and phthalocyanine pigments. In addition,polyolefin resin powder, polyester resin powder, polyamide resin powder, polyimide resin powder and polyfluoroethylene resin powder can be used. For production of those organic powders, the methods described in JP-A-62-18564 and JP-A-60-255827 can be adopted.

To binders, lubricants, dispersants, additives, solvents, dispersion methods and contents of these ingredients used for the nonmagnetic layer or a backing layer described hereinafter, those described above for the magnetic layer are applicable. In addition, known arts concerning the magnetic layer can be applied to the amounts and species of binders, the additives, and the amounts and species of dispersants in particular.

### «Support»

The support suitable for magnetic tape according to the invention is a nonmagnetic flexible support. In every in-plane direction of the support, it is appropriate that the heat-shrinkage rate under heating at 100°C for 30 minutes be 0.5% or below and the heat-shrinkage rate under heating at 80°C for 30 minutes be 0.5% or below, preferably 0.2% or below. Further, it is preferable that there is almost no difference in both heat-shrinkage rate under heating at 100°C for 30 minutes and heat-shrinkage rate under heating at 80°C for 30 minutes between individual in-plane directions of the support and, if any, the difference is within 10%. And the support is preferably nonmagnetic.

Examples of a material usable as such a support include known films, such as films of polyesters (e.g., polyethylene terephthalate, polyethylene naphthalate), polyolefins, cellulose triacetate, polycarbonate, aromatic or aliphatic polyamide, polyimide, polyamideimide, polysulfone, polyaramide and polybenzoxazole. Of these films, high-strength supports, such as polyethylene naphthalate and polyamide, are especially preferred. In order to control the surface roughness of the magnetic surface and that of the base surface (back surface) independently as required, it is also possible to use the laminate-type support as disclosed in JP-A-3-224127. These support materials may undergo in advance corona discharge, plasma treatment, adhesion-increasing treatment, heat treatment and dust removal treatment. Alternatively, an aluminum or glass substrate can be used as a support in the invention.

It is appropriate to use a support having a center-plane average surface roughness Ra of 4. 0 nm or below, preferably 2. 0 nm or below, as measured with a WYKO profilometer HD-2000. For such a support, it is advantageous to have not only the small center-plane average surface roughness specified above but also no coarse protuberances at least 0.5 µm high. And the surface roughness profile is adjusted freely by selecting sizes and amounts of fillers added to the support on an as needed basis. Examples of such fillers include oxides or carbonates of Ca, Si and Ti, and organic fine powders of acrylic resins. It is appropriate that the support have a maximum height Rmax of 1 µm or below, a ten-point average roughness Rz of 0. 5 µm or below, a center-plane peak height Rp of 0. 5 µm or below, a center-plane valley depth Rv of 0.5 µm or below, a center-plane area rate Sr of 10 % to 90 % and an average wavelength λa of 5 µm to 300 µm. With the intention of achieving the desired electromagnetic conversion characteristic and durability, the protuberance distribution on the support surface canbe controlledarbitrarily by adding fillers to the support. To the support, 0 to 2,000 filler particles measuring 0.01 to 1 µm in size can be added per 0.1 mm². Within this range, the protuberance distribution on the support surface can be controlled.

The suitable F-5 value of the support used in the invention is from 49 to 490 MPa (5 to 50 Kg/mm²). The suitable heat shrinkage rate of the support is at most 3 %, preferably at most 1.5 %, under heating at 100°C for 30 minutes, and at most 1 %, preferably at most 0.5 %, under heating at 80°C for 30 minutes. It is advantageous for the support to have its tensile strength at break in the range of 49 to 980 MPa (5 to 100 kg/mm²) and its elasticity modulus in the range of 980 to 19,600 Mpa (100 to 2,000 kg/mm²). The temperature expansion coefficient of the support is from 10⁻⁴/°C to 10⁻⁸/°C, preferably from 10⁻⁵/°C to 10⁻⁶/°C. And the humidity expansion coefficient of the support is 10⁻⁴/RH% or below, preferably 10⁻⁵/RH% or below. And it is preferable that those thermal characteristics, dimensional characteristics and mechanical strength characteristics are each roughly equal within 10% variations in every in-plane direction of the support.

### «Backing Layer»

In the magnetic tape according to the invention, its support can also be coated with a backing layer on the side opposite to the side having the magnetic layer as required. A backing layermaybe provided even inmagnetic disks, though. Ingeneral, magnetic tapes for recording of computer data are strongly required to withstand repeated running, compared with videotapes and audiotapes. For retention of a great durability under running conditions, it is appropriate that carbon black and an inorganic powder be incorporated into the backing layer.

As the carbon black used in the backing layer, a combination of two types of carbon black products differing in average particle size is preferred. In this case, it is appropriate that fine-particle carbon black ranging in average particle size from 10 to 20 nm and coarse-particle carbon black ranging in average particle size from 230 to 300 nm be used in combination. In general not only the surface electrical resistance but also the light transmittance of the backing layer can be set at low values by addition of fine-particle carbon black. Depending on the types, many of magnetic recorders utilize light transmittance of tapes for operation signals. In these cases, therefore, the addition of fine-particle carbon black is especially effective. Moreover, fine-particle carbon black is generally high in liquid lubricant holding power, so it can contribute to reduction in friction coefficient when used in combination with a liquid lubricant. The coarse-particle carbon black ranging in size from 230 to 300 nm, on the other hand, has a function as solid lubricant and forms minute protuberances on the backing layer surface to result in contact area reduction, thereby contributing to reduced friction coefficient.

Commercial products of fine-particle carbon black and those of coarse-particle carbon black can be used in the backing layer, and for the trade names thereof those recited in WO 98/35345 can be referred to.

When two types of carbon black having different average particle sizes are used in the backing layer, the suitable ratio (by weight) between fine-particle carbon black measuring 10-20 nm in average size and coarse-particle carbon black measuring 230-300 nm in average size is from 98:2 to 75:25, preferably from 95:5 to 85:15.

The carbon black content (the total carbon black content in the case of using two types of carbon black) in the backing layer is generally from 30 to 80 parts by weight, preferably from 45 to 65 parts by weight, per 100 parts by weight of binder.

The inorganic powder suitably used in the backing layer is a combination of two kinds of inorganic powder differing in hardness. Specifically, it is advantageous to use a combination of soft inorganic powder having Mohs' hardness of 3 to 4.5 and hard inorganic powder having Mohs' hardness of 5 to 9. Addition of the soft inorganic powder having Mohs' hardness of 3 to 4.5 enables stabilization of the friction coefficient during repeated running. Moreover, no scraping of sliding guide poles by inorganic powder occurs so long as the inorganic powder has the hardness in such a range. And it is preferable that the soft inorganic powder has its average grain size in the range of 30 to 50 nm.

Examples of soft inorganic powder having Mohs' hardness of 3 to 4.5 include calcium sulfate, calcium carbonate, calcium silicate, barium sulfate, magnesium carbonate, zinc carbonate and zinc oxide. These powders can be used alone, or as combinations of two or more thereof.

The suitable content of soft inorganic powder in the backing layer is from 10 to 140 parts by weight, preferably from 35 to 100 parts by weight, per 100 parts by weight of carbon black.

The addition of hard inorganic powders having Mohs' hardness of 5 to 9 can heighten the strength of the backing layer and enhance the running durability. The use of these inorganic powders in combination with carbon black and the soft inorganic powders as recited above can reduce deterioration from repeated sliding and strengthen the backing layer. Further, the hard inorganic powders added can impart an appropriate grinding power to the backing layer to result in reduced adhesion of scrapings to tape guide poles. In addition, the use of hard inorganic powders in combination with soft inorganic powders in particular can enhance the slide characteristics upon movement over guide poles having rough surfaces and can stabilize the friction coefficient of the backing layer.

It is appropriate that the hard inorganic powders have their average grain sizes in the range of 80 to 250 nm, preferably 100 to 210 nm.

Examples of hard inorganic powder having Mohs' hardness of 5 to 9 include α-iron oxide, α-alumina, and chromium oxide (Cr₂O₃). These powders may be used alone or as a combination of two or more thereof. Of those powders, α-iron oxide or α-alumina is used to advantage. The content of hard inorganic powder is generally from 3 to 30 parts by weight, preferably from 3 to 20 parts by weight, per 100 parts by weight of carbon black.

When a combination of soft and hard inorganic powders are used in the backing layer, it is preferable to select these powders so that the hardness difference between the powders is at least 2 (preferably at least 2.5, particularly preferably at least 3).

It is advantageous that the backing layer contains two kinds of inorganic powders having average grain sizes within respectively specified limits and differing in Mohs' hardness and two types of carbon black having different average particle sizes.

The backing layer can further contain a lubricant. The lubricant can be selected appropriately from those recited as examples of lubricants usable in the nonmagnetic layer or the magnetic layer. To the backing layer, such lubricants are generally added in a proportion of 1 to 5 parts by weight to 100 parts by weight of binder.

### «Undercoat Layer»

In magnetic tape according to the invention, an undercoat layer may be provided between the support and the magnetic layer or the nonmagnetic layer, if needed. The undercoat layer provided can enhance adhesion force between the support and the magnetic or nonmagnetic layer. For the undercoat layer, solvent-soluble polyester resins can be used.

### «Layer Structure»

From the viewpoint of the distribution of thickness among constituent layers of magnetic tape according to the invention, the support having its thickness in the range of 3.0 to 6.5 µm (preferably from 3.0 to 6.0 µm, far preferably from 4.0 to 5.5 µm) can be used.

And the thickness of the undercoat layer is from 0.1 to 1.0 µm, preferably from 0.1 to 0.7 µm. In the case of providing a backing layer, the thickness of the backing layer is from 0.2 to 1.0 µm, preferably from 0.3 to 0.7 µm.

In magnetic tape according to the invention, the thickness of the nonmagnetic layer and that of the magnetic layer are optimized in response to the saturation magnetization of a head used, the head gap length of a head used and the frequency band of recording signals. The suitable thickness of the magnetic layer is from 0.01 to 0.15 µm as mentioned hereinbefore, and the thickness of the nonmagnetic layer is generally from 0.5 to 3.0 µm, preferably from 1 to 2.5 µm, far preferably from 1.3 to 1.7 µm.

When the magnetic tape has two magnetic layers, the nonmagnetic layer and the soft magnetic layer may be provided, or doesn't need to be. For instance, the thickness of the magnetic layer on the side far from the support can be adjusted to the range of 0.01 to 0.1 µm, preferably 0.01 to 0.05 µm, and the thickness of the magnetic layer on the side near to the support can be adjusted to the range of 0.05 to 0.15 µm. Incidentally, when the magnetic layer is used alone, the thickness thereof is set at 0.2 µm or below as mentioned hereinbefore.

### «Preparation Method»

The process of preparing a magnetic coating material for magnetic tape according to the invention includes at least a kneading step, a dispersing step, and mixing steps provided before or after those steps on an as needed basis. Each step may be separated into at least two stages. Every material used in magnetic tape according to the invention, inclusive of ferromagnetic powder, nonmagnetic powder, radiation-curable resin, binder, carbon black, an abrasive, an antistatic agent, a lubricant and a solvent, may be added at the beginning or in the course of every step. In addition, each material may be divided into two or more portions, and added in separate steps. For instance, the input of polyurethane may be divided among the kneading step, the dispersing step and the mixing step for viscosity adjustment after dispersion.

For achieving the object of the invention, preparation techniques hitherto known may be applied to part of the steps. In the kneading step, for example, a mighty kneading machine, such as an open kneader, a continuous kneader, a pressurized kneader or an extruder, is used to advantage. When such a kneader is used, all or part of binder (preferably at least 30 % of the total binder) and magnetic or nonmagnetic powder are kneaded in proportions of 15-500 parts by weight binder to 100 parts by weight magnetic or nonmagnetic powder. The details of such kneading treatment are described in JP-A-1-106338 and JP-A-64-79274. In the dispersing step for preparing each of a coating material for the magnetic layer and a coating material for the nonmagnetic layer, though glass beads can be used as a medium for dispersion, it is preferable to use beads greater in specific gravity, such as zirconia beads, titania beads or steel beads. Therein, such a medium is adjusted so as to have an optimum size and used in an optimized packing rate. As to the dispersing machine, known ones can be used therein.

A coating material for the magnetic layer and a coating material for the nonmagnetic layer may be coated sequentially or simultaneously in the double-layer form. When the magnetic layer is made up of two layers, a coating material for the lower magnetic layer and a coating material for the upper magnetic layer may be coated sequentially or simultaneously in the double-layer form. However, it is preferable to form the nonmagnetic layer and the magnetic layer in accordance with the wet-on-dry coating method. More specifically, it is preferable that the nonmagnetic layer is formed by coating on a support a coating material containing nonmagnetic powder and binder, and then by drying the coating material, and thereafter the magnetic layer is formed by coating on the thus formed nonmagnetic layer a coating material containing ferromagnetic powder and binder, and then by drying the coating material.

Examples of a coating machine usable for coating the coating material for the magnetic layer or the nonmagnetic layer include an air doctor coater, a blade coater, a rod coater, an extrusion coater, an air knife coater, a squeegee coater, a dip coater, a reverse roll coater, a transfer roll coater, a gravure coater, a kiss coater, a cast coater, a spray coater and a spin coater. For details of these coaters a book entitled "Saishin Koutingu Gijutu", published by Kabushikigaisha Sougou Gijutu Senta (May 31, 1983) can be referred to.

For preparation of magnetic tape having a double-layer structure by use of a coating technique, it is appropriate to adopt any of the following methods:
(1) A lower layer is coated first by the use of a coating device usually used for coating a magnetic coating material, such as a gravure coater, a roll coater, a blade coater or and extrusion coater. And while it is in a wet state, the lower layer is coated with an upper layer by the use of a pressurized support-type extrusion coating device as disclosed in JP-B-1-46186, JP-A-60-238179 and JP-A-2-265672.
(2) An upper layer and a lower layer are coated almost simultaneously by the use of a coating head having 2 slits for passage of coating solutions as disclosed in JP-A-63-88080, JP-A-2-17971 and JP-A-2-265672.
(3) An upper layer and a lower layer are coated almost simultaneously by the use of a backup roll-attached extrusion coating device as disclosed in JP-A-2-174965.

In addition, it is preferable to apply sheering stress to the coating solution in the interior of a coating head by the use of the method disclosed in JP-A-62-95174 or JP-A-1-236968 in order that the magnetic tape to be prepared can avoid suffering degradation in electromagnetic conversion characteristics from agglomeration of magnetic grains. Further, it is appropriate for the coating solution to have its viscosity in the numerical range disclosed in JP-A-3-8471.

The magnetic tape is forced to become oriented in the length direction by use of a cobalt magnet or a solenoid. And it is preferable that the coating-and-drying process of coating materials is designed to enable the drying position control on coatings by regulating the drying-air temperature and quantity and the coating speed. Specifically, it is preferable that the coating speed is chosen from the range of 20 to 1, 000 m/min and the drying-air temperature is set at 60°C or above. In addition, the coatings can be subjected to moderate pre-drying before they are made to enter into the magnet zone.

Examples of a roll usable in the calender treatment include heat-resistant plastic rolls, such as rolls made from epoxy resin, polyimide, polyamide and polyimideamide, and metal rolls. When there are magnetic layers on both sides in particular, the treatment with a pair of metal rolls is preferred. The suitable treatment temperature is 50°C or higher, preferably 100°C or higher, and the suitable between-roll pressure is at least 196 kN/m (200 kg/cm), preferably at least 294 kN/m (300 kg/cm).

### «Physical Properties»

The squareness ratio of magnetic tape is at least 0.7, preferably at least 0.8.

The coefficient of friction of the present magnetic tape against a magnetic head is generally at most 0.5, preferably at most 0.3, as measured at temperatures of -10°C to 40°C and humidities of 0 to 95%. The resistivity of the magnetic layer surface is preferably from 10⁴ to 10¹² Ω/sq, and the electrification potential is preferably from -500 V to +500 V. The elasticity modulus of the magnetic layer under 0.5 % elongation is preferably from 980 to 19,600 MPa (from 100 to 2,000 kg/mm²) in every in-plane direction, and the strength at break is preferably from 98 to 686 MPa (from 10 to 70 kg/mm²). The elasticity modulus of the magnetic tape is preferably from 980 to 14,700 MPa (from 100 to 1,500 kg/mm²) in every in-plane direction. The residual elongation is preferably at most 0.5%, and the heat shrinkage under any temperature not higher than 100°C is preferably at most 1 %, far preferably at most 0.5 %, particularly preferably at most 0.1 %.

The glass transition temperature (the maximum point of loss elasticity modulus in the dynamic viscoelasticity measurement at 110 Hz) of the magnetic layer is preferably from 80 to 120°C, and that of the nonmagnetic layer also is preferably from 80 to 120°C. The loss elasticity modulus is preferably from 1×10⁵ to 8×10⁸ Pa, and the loss tangent is preferably at most 0.2. When the loss tangent is too great, blocking troubles tend to occur. The difference in each of these thermal and mechanical properties between individual in-plane directions of the recording material is within 10%, preferably almost zero. The residual solvent in the magnetic layer is preferably at most 100 mg/m², far preferably at most 10 mg/m². The porosity the coating layer has, irrespective of whether the layer is magnetic or nonmagnetic, is preferably at most 30 % by volume, far preferably at most 20 % by volume. Although the smaller porosity is more favorable for accomplishing high output, it is sometimes better to secure a measure of porosity. In many of repeated use-oriented disk medium, for example, the greater porosity is more instrumental in ensuring satisfactory running durability.

The number of the protuberances on the surface of the magnetic layer can be controlled with ease through surface profile control by addition of filler to the support, or/and through proper selection of the grain sizes and the quantity of powder added to the magnetic layer or the surface profile of rolls used for calender treatment. The curl of the magnetic tape is controlled so as to fall within ±3 mm. It may easily be presumed that the magnetic layer and the nonmagnetic layer of the present magnetic tape can be adjusted individually in each of the foregoing physical properties in response to the desired purposes. For instance, the magnetic layer is designed to have a high elasticity modulus in order to enhance the running durability and, at the same time, the elasticity modulus of the nonmagnetic layer is controlled to a lower value than that of the magnetic layer, thereby lessening the impact of the magnetic tape upon a head.

In this society of multimedia, the needs for recording of images are becoming increasingly greater in not only industry but also home. The magnetic tape according to the invention has sufficient capability to meet function/cost requirements for a material on which not only textual data including characters and numerals but also pictorial data are recorded.

The present magnetic tape is suitably applicable to magnetic recording/reproducing systems using magnetoresistive heads (MR heads) for reproduction. The MR heads have no particular restriction as to their types, but they may be GMR heads or TMR heads. The heads used for recording have no particular restrictions, but it is preferable that their saturation magnetization is at least 1.2 T, especially at least 2.0 T.

The present magnetic tape is suitable for computer data recording.

### EXAMPLES

The invention will now be illustrated in more detail by reference to the following examples, but these examples should not be construed as limiting the scope of the invention in any way.

### EXAMPLE 1

### Composition of Coating Material for Magnetic Layer:

| | |
|---|---|
| Ferromagnetic metal powder | 100 parts |
| Composition: Fe/Co=100/30 | |
| Average major-axis length: 45 nm | |
| Coercivity Hc: 197 kA/m (2,480 Oe) | |
| BET specific surface area: 68 m²/g | |
| Crystallite size: 13 nm (130 angstrom) | |
| Layer formed by surface treatment: Al₂O₃, Y₂O₃ | |
| Average acicular ratio: 6 | |
| Saturation magnetization σs: 120 A·m²/kg | |
| Polyurethane resin A | 12 parts |
| DD/HbpA/DEIS/MDI=5/24/1/32 (molar ratio) | |
| DD: Dimer diol | |
| HBpA: Hydrogenated bisphenol A | |
| DEIS: Sulfoisophatalic acid-ethylene oxide adduct | |
| MDI: Diphenylmethane diisocyanate | |
| α-Alumina (average particle size: 0.1 µm) | 5 parts |
| HIT60 produced by Sumitomo Chemical Co., Ltd. | |
| Carbon black (average particle size: 0.08 µm) | 0.5 parts |
| Butyl stearate | 1 parts |
| Stearic acid | 5 parts |
| Methyl ethyl ketone | 90 parts |
| Cyclohexanone | 30 parts |
| Toluene | 60 parts |

### Composition of Coating Material for Nonmagnetic Layer:

| | |
|---|---|
| Nonmagnetic powder α-Fe₂O₃ (hematite) | 80 parts |
| Average major-axis length: 0.15 µm | |
| BET specific surface area: 52 m²/g | |
| pH: 8 | |
| Tap density: 0.8 g/ml | |
| DBP absorptive capacity: 80 ml/100 g | |
| Layer formed by surface treatment: Al₂O₃, Y₂O₃ | |
| Carbon Black | 20 parts |
| Average primary particle size: 16 nm | |
| DBP absorptive capacity: 80 ml/100g | |
| pH: 8 | |
| BET specific surface area: 250 m²/g | |
| Volatile matter: 1.5 % | |
| Vinyl chloride copolymer | 12 parts |
| MR-104 produced by ZEON CORP. | |
| Polyurethane resin A | 5 parts |
| Polyisocyanate | 3 parts |
| Coronate L produced by Nippon Polyurethane Industry Co., Ltd. | |
| α-Alumina (average particle size: 0.1 µm) | 1 parts |
| HIT60 produced by Sumitomo Chemical Co., Ltd. | |
| Butyl stearate | 1 parts |
| Stearic acid | 1 parts |
| Methyl ethyl ketone | 100 parts |
| Cyclohexanone | 50 parts |
| Toluene | 50 parts |

### Composition of Coating Material for Backing Layer:

| | |
|---|---|
| Carbon black 1 | 100 parts |
| Average primary particle size: 17 nm | |
| DBP absorptive capacity: 75 ml/100g | |
| pH: 8.0 | |
| BET specific surface area: 220 m²/g | |
| Volatile matter: 1.5 % | |
| Bulk density: 15 lbs/ft³ (240 kg/m³) | |
| Carbon black 2 | 100 parts |
| Average primary particle size: 100 nm | |
| DBP absorptive capacity: 67 ml/100g | |
| pH: 8.5 | |
| BET specific surface area: 20 m²/g | |
| α-Alumina (average particle size: 0.2 µm) | 0.1 parts |
| Nitrocellulose resin | 100 parts |
| Polyester polyurethane resin | 30 parts |
| Nipporan produced by Nippon Polyurethane Industry Co., Ltd. | |
| Copper oleate | 10 parts |
| Copper phthalocyanine | 10 parts |
| Barium sulfate (precipitated) | 5 parts |
| Methyl ethyl ketone | 500 parts |
| Toluene | 500 parts |

### Making of Magnetic Tape:

A coating material for a magnetic layer and a coating material for a nonmagnetic layer were each prepared by kneading all the components described above individually with an open kneader, subjecting the kneaded matter to dispersion treatment with a sandmill, and then passing the dispersion through a filter having an average pore size of 1 µm.

On a 5 µm-thick polyethylene naphthalate Support 1 having a center-line average roughness of 4.0 nm and 20/cm² of protuberances standing 270 nmhigh on the magnetic layer-coating side, the coating material prepared for a nonmagnetic layer and the coating material prepared for a magnetic layer were coated in the order of mention almost simultaneously that the nonmagnetic layer had a thickness of 1.5 µm after drying and the magnetic layer had a thickness of 0.1 µm. Then, the magnetic layer coated was brought into a state of magnetic alignment by use of a cobalt magnet having magnetic force of 300 mT (3,000 G) and a solenoid having magnetic force of 150 mT (1, 500 G) while both the coating layers were still in a wet state. After drying, surface treatment using a 7-stage calender including metal rolls and epoxy resin rolls was performed at a rate of 200 m/min under a temperature of 40°C. Further, the back of the support was coated with a 0.5 µm-thick backing layer. The thus prepared magnetic material was slit into 12.65 mm-wide strips to make magnetic tapes.

Guard bands of these magnetic tapes each, which were present in the form of 0.6 mm-wide belt along the both edges of each tape) respectively, were subjected to laser ablation to prepare samples.

### EXAMPLE 2

Mechanical abrasion was carried out in place of the laser ablation in Example 1.

### EXAMPLE 3

Embossment processing from the side of the backing layer was carried out in place of the laser ablation in Example 1.

### EXAMPLE 4

Instead of the guard bands in Example 1, servo track bands (which were present at the positions of 0.7 mm, 3.5 mm, 6.4 mm, 9.3 mm and 12.2 mm, respectively, upward from the lower tape edge in the form of 0.2 mm-wide belt) were subjected to the laser ablation.

### COMPARATIVE EXAMPLE 1

The laser ablation in Example 1 was not carried out.

### COMPARATIVE EXAMPLE 2

Instead of guard bands alone in Example 1, the laser ablation was carried out throughout the tape surface.

Performance capabilities of the thus obtained magnetic tapes were evaluated as follows. The results obtained are shown in Table 1.

### 1) Friction Coefficient

On the surface of each magnetic tape sample, an Altic bar (5mm φ) was slid over a length of 100 mm for 1,000 times while applying a wrap angle of 90° and a tension of 1N to the tape. Thereafter, friction coefficient of the tape surface thus slid was determined, and thereby the evaluation was made.

### 2) Electromagnetic Conversion Characteristics (SNR, Number of Dos)

Measurements were made under the following conditions:
Recording frequency: 12,000 frpmm
Recording track width: 13 µm
Reproducing head width: 6.5 µm
Tape feed speed: 6 m/s

The number of DOs (dropouts) is expressed in terms of the number of occurrences of events per 1 mm when the output drops to 35% or below of the average output.

### 3) Error Rate

Error rates were measured with a modified LTO drive having the foregoing heads.

### 4) Durability

Recording and reproducing operations over a tape length of 580 m were performed repeatedly with the modified drive used in the foregoing error rate measurements, and the error rates during reproducing operations were monitored. When the error rate was degraded to 10⁻², the drive was stopped. And the number of cycles of recording and reproducing repeated until then was expressed in p. Herein, the complete running was defined as 10,000 p or above.

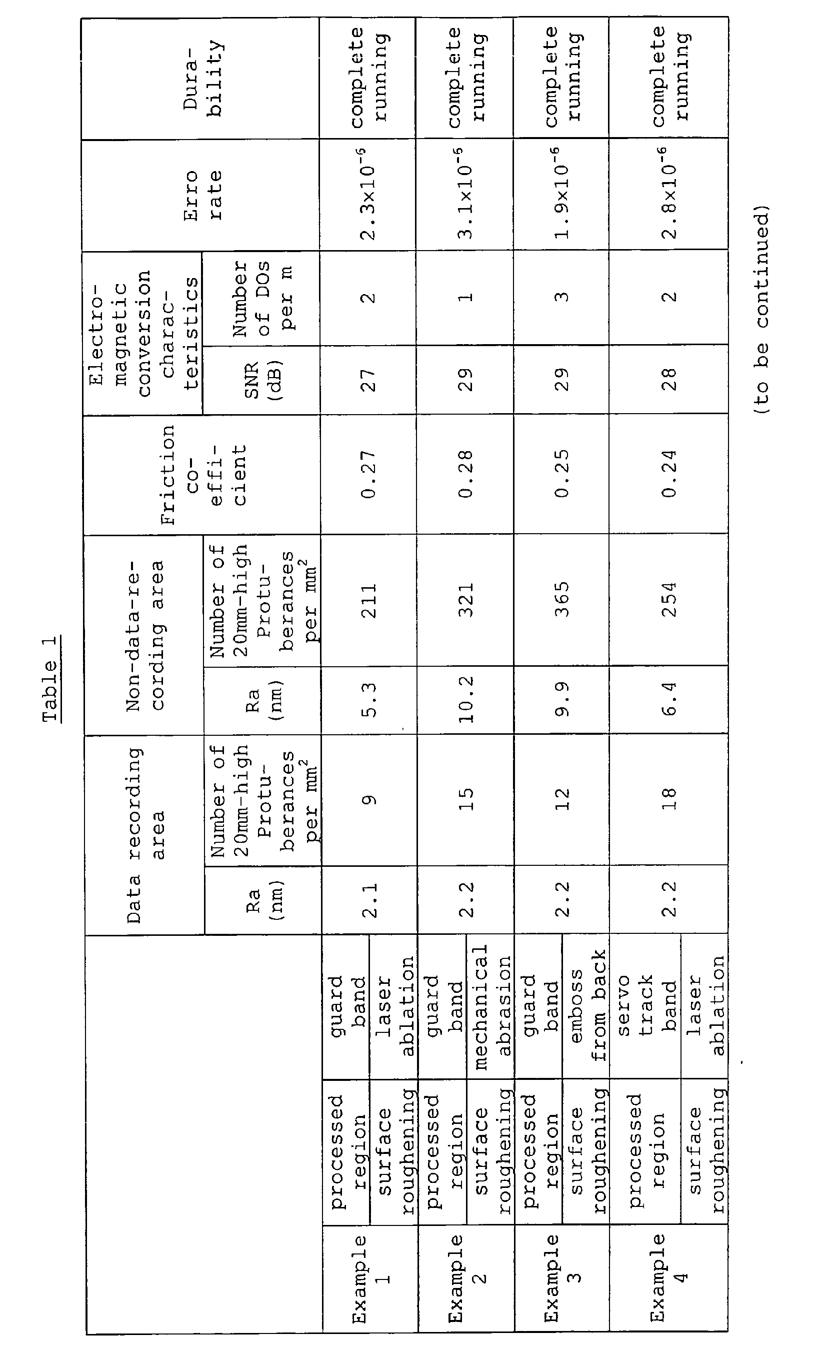

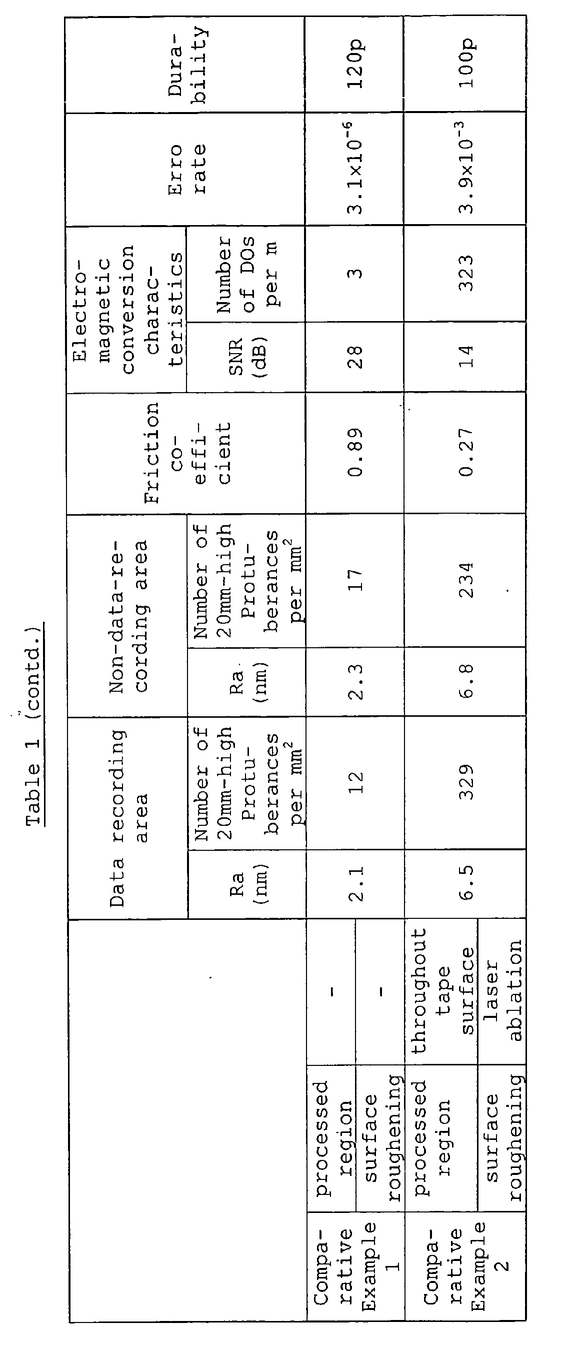

As can be seen from Table 1, the magnetic tapes prepared in Examples according to the invention can retain electromagnetic conversion characteristics without causing a rise in friction coefficient and sacrificing durability no matter what method was used for roughening the guard bands or the servo track bands. On the other hand, the magnetic tapes prepared in Comparative Examples 1 and 2, which had the same surface property throughout their individual surfaces, are required to sacrifice at least either electromagnetic characteristics or durability.

This application is based on Japanese Patent application JP 2004-158858, filed May 28, 2004, the entire content of which is hereby incorporated by reference. This claim for priority benefit is being filed concurrently with the filing of this application.

## Claims

1. An information recording tape comprising a data-recording area and a non-data-recording area, wherein
the data-recording area has a first center-line average surface roughness Ra smaller than 3 nm and first protuberances having at least 20 nm heights at 100/mm² or less and
the non-data-recording area has a second center-line average surface roughness Ra greater than 2 nm and second protuberances having at least 20 nm heights at 100/mm² or more.

2. The information recording tape according to claim 1, wherein a first center-line average surface roughness Ra is 1 to 2.5 nm.

3. The information recording tape according to claim 1, wherein a first center-line average surface roughness Ra is 1 to 2 nm.

4. The information recording tape according to claim 1, wherein the data-recording area has first protuberances having heights of 20 to 60nm at 100/mm² or less.

5. The information recording tape according to claim 1, wherein the data-recording area has first protuberances having heights of 20 to 40nm at 100/mm² or less.

6. The information recording tape according to claim 1, wherein the data-recording area has first protuberances having at most 20nm heights at 1 to 50/mm².

7. The information recording tape according to claim 1, wherein the data-recording area has first protuberances having at most 20nm heights at 1 to 20/mm².

8. The information recording tape according to claim 1, wherein a second center-line average surface roughness Ra is 3 to 10 nm.

9. The information recording tape according to claim 1, wherein a second center-line average surface roughness Ra is 3 to 7 nm.

10. The information recording tape according to claim 1, wherein the non-data-recording area has second protuberances having heights of 20 to 60nm at 100/mm² or more.

11. The information recording tape according to claim 1, wherein the non-data-recording area has second protuberances having heights of 20 to 40nm at 100/mm² or more.

12. The information recording tape according to claim 1, wherein the data-recording area has second protuberances having at most 20nm heights at 200 to 500/mm².

13. The information recording tape according to claim 1, wherein the data-recording area has second protuberances having at most 20nm heights at 200 to 300/mm².

14. The information recording tape according to claim 1, wherein the information recording tape is a magnetic tape.

15. The information recording tape according to claim 14, wherein the magnetic tape comprises a support and a magnetic layer containing a binder and a ferromagnetic powder dispersed in the binder.

16. The information recording tape according to claim 15, wherein the magnetic tape further comprises a back layer.

17. The information recording tape according to claim 15, wherein the magnetic tape further comprises a non-magnetic layer between the support and the magnetic layer.
